# EUROPEAN PATENT APPLICATION

(11) **EP 2 224 386 A1**
(43) Date of publication of application: **01.09.2010**
(21) Application number: 09153653.2
(22) Date of filing: 25.02.2009
(51) Int. Cl.: G06Q 10/00, H04N 1/00, H04N 101/00

(54) **Method and mobile computing device for setting a pictorial reminder**

(71) Applicant: RESEARCH IN MOTION LIMITED, Waterloo, Ontario N2L 3W8 (CA)
(72) Inventor: Wood, Todd, Waterloo Ontario N2L 3W8 (CA); Griffin, Jason, Waterloo Ontario N2L 3W8 (CA); Perez, Carlos, St George Ontario N0E 1N0 (CA)
(74) Representative: MERH-IP Matias Erny Reichl Hoffmann

(57) **Abstract**

A method, mobile computing device and system for setting pictorial reminders are provided. A digital image is acquired (210), via a picture application at a mobile computing device. Within the picture application at the mobile computing device, an indication to create a pictorial reminder is received (220), based on the digital image. An indication of scheduling data is received (225), the scheduling data for scheduling displaying of the digital image on a display of the mobile computing device. In a database on the mobile computing device, a pictorial-reminder record is stored (230), including the scheduling data and an indication of the digital image.

## Description

The specification relates generally to mobile computing devices, and specifically to a method and mobile computing device for setting a pictorial reminder.

Setting reminders for events in calendar applications is generally performed by typing a description and/or creating a task and/or a calendar event into the calendar application. This can be a tedious task, and furthermore if the description is vague, a user viewing a reminder may not be made aware of what they are being reminded to do.

Hence, solutions to this problem exist that involve attaching an existing photo to an existing reminder. However, these generally involve creating the reminder and the photo separately, and then manually attaching the photo to the reminder afterwards. Such a process is again tedious and generally wastes system resources at a computing device as oftentimes the location of the photo needs to be searched in order to implement the attachment. This wastes the processing capabilities of the computing device, as well as places a mechanical strain on input devices used to enter data to locate the photo.

### GENERAL

A first aspect of the specification may provide a method for setting pictorial reminders, via a picture application, using a mobile computing device enabled to acquire digital images. The method may comprise acquiring, via the picture application, a digital image at the mobile computing device. The method may further comprise, within the picture application at the mobile computing device, receiving an indication to create a pictorial reminder based on the digital image. The method may further comprise, receiving an indication of scheduling data, the scheduling data for scheduling displaying of the digital image on a display of the mobile computing device. The method further comprises storing, in a database on the mobile computing device, a pictorial-reminder record including the scheduling data and an indication of the digital image.

Acquiring a digital image at the mobile computing device can comprise at least one of capturing the digital image via a digital camera on the mobile computing device, receiving the digital image via communications with an external device, and receiving a selection of the digital image from amongst one or more digital images stored on a memory device of the mobile computing device.

The scheduling data can comprise a start date for displaying the digital image. The scheduling data can comprise a time interval at which the displaying of the digital image is periodically repeated beginning at the starting date. The start date can be a current date.

The indication of the digital image can be one of the digital image and an indication of where the digital image is stored on a memory device of the mobile computing device.

The method can further comprise displaying the digital image on the display in accordance with the scheduling data. Displaying the digital image on the display in accordance with the scheduling data can comprise displaying at a time of day that is at least one of located within a predetermined time period and designated as free time in a calendar database. The calendar database can comprise the database. Displaying the digital image on the display in accordance with the scheduling data can comprise providing an option to alter the scheduling data.

The method can further comprise providing, within the picture application, an icon indicative of setting pictorial reminders, wherein receiving an indication to create a pictorial reminder can comprise receiving a selection of the icon in association with the digital image.

A second aspect of the specification may provide a mobile computing device for setting pictorial reminders. The mobile computing device may comprise a display enabled to display a digital image. The mobile computing device may further comprise a memory device for storing a database. The mobile computing device may further comprise a processing unit in communication with the display and the memory device. The processing unit may be enabled to process a picture application for acquiring the digital image. The processing unit may be further enabled to acquire, via the picture application, the digital image at the mobile computing device. The processing unit may be further enabled to, within the picture application, receive an indication to create a pictorial reminder based on the digital image. The processing unit may be further enabled to receive an indication of scheduling data, the scheduling data for scheduling displaying of the digital image on a display of the mobile computing device. The processing unit may be further enabled to store, in the database, a pictorial-reminder record including the scheduling data and an indication of the digital image.

To acquire, via the picture application, the digital image, the processing unit can be enabled to at least one of: capture the digital image via a digital camera on the mobile computing device; receive the digital image via communications with an external device; and receive a selection of the digital image from amongst one or more digital images stored on the memory device.

The scheduling data can include a start date for displaying the digital image. The scheduling data can comprise a time interval at which the displaying of the digital image is periodically repeated beginning at the starting date. The start date can be a current date.

The indication of the digital image can be one of the digital image and an indication of where the digital image is stored on a memory device of the mobile computing device.

The processing unit can be further enabled to display the digital image on the display in accordance with the scheduling data. To display the digital image on the display in accordance with the scheduling data, the processing unit can be further enabled to display the digital image at a time of day that is at least one of located within a predetermined time period and designated as free time in a calendar database. The calendar database can comprise the database.

To display the digital image on the display in accordance with the scheduling data, the processing unit can be further enabled to provide an option, at the display, to alter the scheduling data.

The processing unit can be further enabled to provide, within the picture application, an icon indicative of setting pictorial reminders, and wherein the indication to create a pictorial reminder comprises a selection of the icon in association with the digital image. The mobile computing can further comprise an input device for receiving the selection of the icon.

The mobile computing device can further comprise an input device for receiving the indication of scheduling data.

A third aspect of the specification may provide a computer-readable medium for storing computer-readable code embodied therein, the computer-readable code being executable by a processor for: acquiring, via a picture application, a digital image at a mobile computing device enabled to acquire digital images; within the picture application at the mobile computing device, receiving an indication to create a pictorial reminder based on the digital image; receiving an indication of scheduling data, the scheduling data for scheduling displaying of the digital image on a display of the mobile computing device; and storing, in a database on the mobile computing device, a pictorial-reminder record including the scheduling data and an indication of the digital image.

### BRIEF DESCRIPTIONS OF THE DRAWINGS

Embodiments are described with reference to the following figures, in which:

Fig. 1 depicts a mobile computing device for setting pictorial reminders, according to non-limiting embodiments;

Fig. 2 depicts a method for setting pictorial reminders, according to non-limiting embodiments;

Fig. 3 depicts a display module, of the mobile computing device of Fig. 1, displaying a digital image to be used as a pictorial reminder, according to non-limiting embodiments;

Fig. 4 depicts a prompt for receiving schedule data, displayed at the display module of Fig. 3, according to non-limiting embodiments;

Fig. 5 depicts a prompt for receiving schedule data, displayed at the display module of Fig. 3, according to non-limiting embodiments;

Fig. 6 depicts the mobile computing device of Fig. 1 with acquired schedule data, according to non-limiting embodiments;

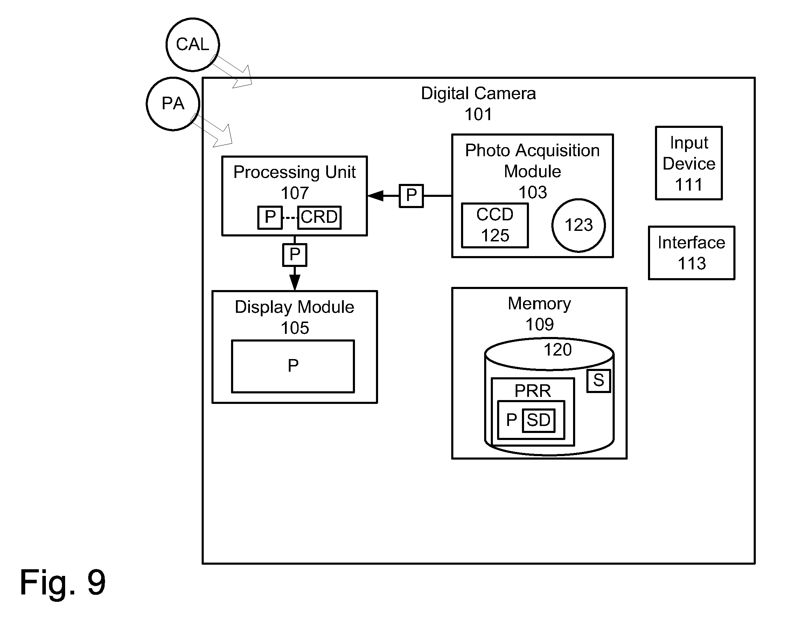

Figs. 7 through 9 depict the mobile computing device of Fig. 1 with acquired schedule data stored in a memory, according to non-limiting embodiments;

Fig. 10 depicts a display module, of the mobile computing device of Fig. 1, displaying a digital image as a pictorial reminder, according to non-limiting embodiments; and

Figs. 11 and 12 depict a system for setting pictorial reminders, according to non-limiting embodiments.

### DESCRIPTION OF PREFERRED EMBODIMENTS

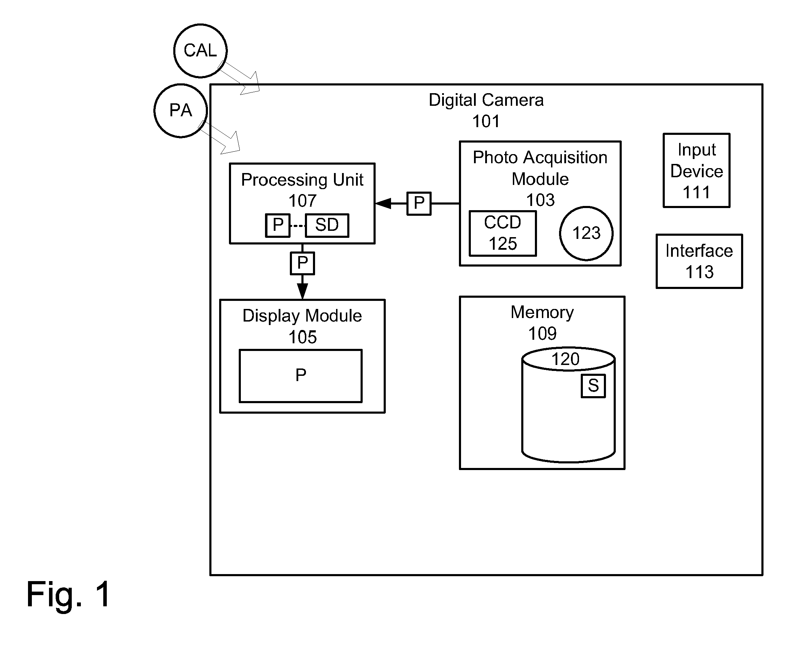

Figure 1 depicts a mobile computing device 101 for setting a reminder. The mobile computing device 101 is enabled to acquire at least one digital image P. In some embodiments, mobile computing device 101 can comprise a photo acquisition module 103 for acquiring the digital image P. However, in other embodiments, the digital image P can be acquired by receiving the digital image P via communications with an external device and/or by receiving a selection of the digital image P from amongst one or more digital images stored on a memory device 109 of the mobile computing device 101. The mobile computing device 101 further comprises a display module 105 for displaying the acquired digital image P. The mobile computing device 101 further comprises a processing unit 107 for processing the digital image P. The mobile computing device 101 further comprises the memory 109 for storing at least the digital image P. The mobile computing device 101 further comprises an input device 111 for receiving input data. The mobile computing device 101 further comprises an interface 113, such that at least the digital image P can be received from an external computing device and/or storage device, and/or transmitted thereto. Hence, the mobile computing device 101 generally comprises a computing device for acquiring and processing the digital image P. The photo acquisition module 103 (if present), the display module 105, the processing unit 107, the memory 109, the input device 111 and the interface 113 can be in communication, for example, via a computer bus.

In some embodiments, as depicted in Figure 1, the memory 109 comprises a calendar database 120. The calendar database 120 can store data S representative of a schedule. In general the processing unit 107 is enabled to: receive an indication to create a pictorial reminder based on the digital image P; receive an indication of scheduling data SD, the scheduling data SD for scheduling displaying of the digital image P on the module 105; and storing, in the calendar database 120, a pictorial-reminder record including the scheduling data SD and an indication of the digital image P. In some embodiments, the scheduling data SD includes a start date for displaying the digital image P. In some of these embodiments, the scheduling data SD comprises a time interval at which the displaying of digital image P is periodically repeated beginning at the starting date. In some embodiments, the start date is a current date.

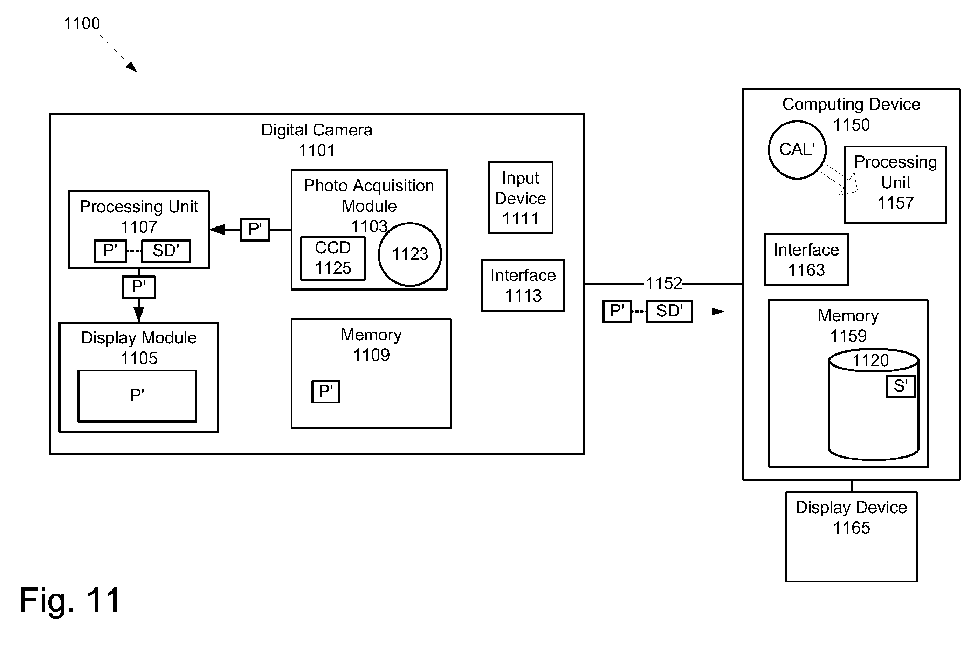

In other embodiments, a calendar database is stored external to the mobile computing device 101 (as in Figure 11).

In some embodiments, the photo acquisition module 103, if present, generally comprises a lens 123 and a charge coupled device (CCD) 125, and the like, for acquiring digital image P, as known to a person of skill in the art. Alternatively, in place of the lens 123, the photo acquisition module 103 can comprise a pinhole.

In any event, once the digital image P is acquired (via the photo acquisition module 103, via communications with an external device and/or by receiving a selection of the digital image P from amongst one or more digital images stored on the memory device 109), the digital image P can be conveyed to the processing unit 107 for processing, and/or to the display module 105 for display and/or to the memory 109 for storage.

The display module 105 comprises any suitable display for displaying digital image P, including but not limited to a liquid crystal display (LCD), and the like.

The memory 109 can comprise any suitable memory including but not limited to random access memory (RAM), flash memory, removable memory, a hard disk, and the like.

The input device 111 can comprise any suitable input device for accepting input data including but not limited to button(s), a keyboard, a track ball, a scroll wheel and/or a combination. In particular, in some embodiments, the input device 111 enables the receipt of input data representative of the scheduling data SD.

The interface 113 can comprise any suitable combination of wired or wireless interface as desired. In particular, the interface 113 enables communication between the mobile computing device 101 and an external computing device and/or an external storage device. For example, the interface 113 enables the receiving and/or conveyance of the digital image P and scheduling data SD between the mobile computing device 101 and the external computing device and/or an external storage device. In these embodiments, the external computing device and/or an external storage device can comprise a calendar database, as depicted in Figure 11.

In exemplary embodiments depicted in Figure 1, the mobile computing device 101 further comprises a calendaring application CAL, which can be stored in the memory 109 and processed by the processing unit 107. Upon processing the calendaring application CAL, the mobile computing device 101 is enabled to provide calendar functionality based on data stored in the calendar database 120, including but not limited to data S representative of a schedule. For example, the mobile computing device 101 is enabled to provide reminders for events stored in the data S representative of a schedule.

In exemplary embodiments depicted in Figure 1, the mobile computing device 101 further comprises a picture application PA, which can be stored in the memory 109 and processed by the processing unit 107. Upon processing the picture application PA, the mobile computing device 101 is enabled to process the digital image P, and in particular, receive an indication to create a pictorial reminder based on the digital image P.

In some embodiments, the mobile computing device 101 further comprises at least one of a PDA, a portable communications device, a portable computing device, a mobile telephone and the like. In these embodiments, the mobile computing device 101 can be further enabled to process e-mail, text messages, mobile telephone calls, browser applications, and any other suitable application for a mobile computing device.

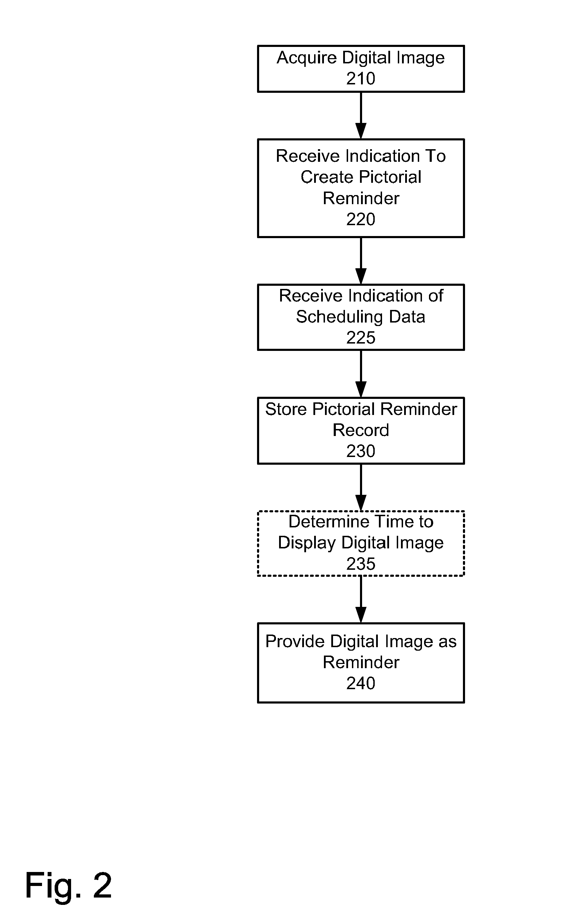

Attention is now directed to Figure 2 which depicts a method 200 for setting a reminder using a digital camera. In order to assist in the explanation of the method 200, it will be assumed that the method 200 is performed using the mobile computing device 101. Furthermore, the following discussion of the method 200 will lead to a further understanding of the mobile computing device 101 and its various components. However, it is to be understood that the mobile computing device 101 and/or the method 200 can be varied, and need not work exactly as discussed herein in conjunction with each other, and that such variations are within the scope of present embodiments.

At step 210, a digital image P is acquired at the mobile computing device 101 via the picture application PA. For example, in some embodiments, the input device 111 can be actuated to cause the photo acquisition module 103 to acquire the digital image P, the picture application enabled to control the photo acquisition module 103 in conjunction with the processing unit 107. In other embodiments the digital image can be received from an external device and processed by the picture application PA. In further embodiments, the digital image can be acquired by receiving a selection of the digital image P from amongst one or more digital images stored on the memory device 109 via the picture application. The digital image P can then be displayed at the display module 105. In general, the digital image P is acquired to use as a reminder in the calendar database 120.

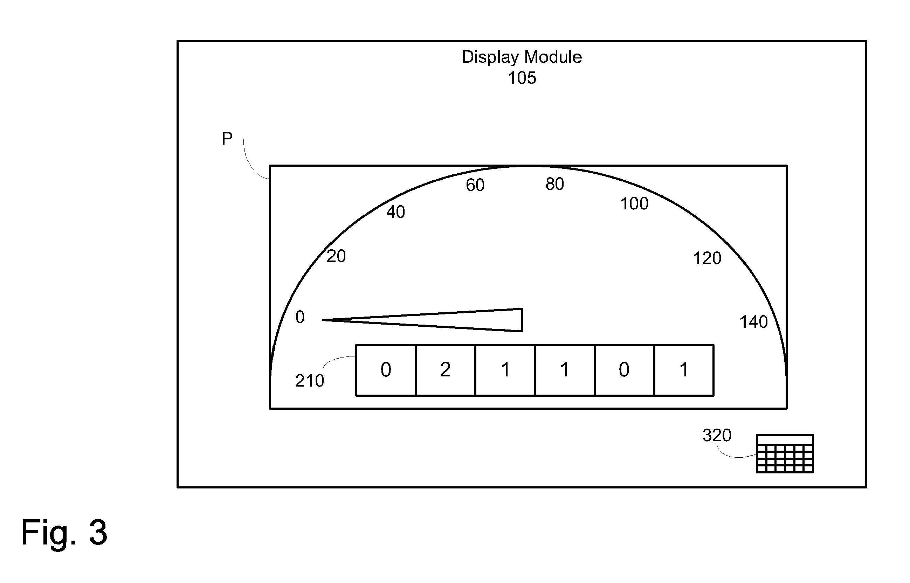

For example as depicted in Figure 3, according to non-limiting embodiments, the digital image P can comprise a photograph of an odometer 210 of a vehicle (not depicted). The photograph of the odometer 210 can be taken at the time of an oil change of the vehicle, and hence the photograph of the odometer 210 can act as a memorial of the mileage of the vehicle (e.g. "021101 ") at the time of the oil change. The digitial image can be provided within the picture application PA.

At step 220, within the picture application PA, an indication to create a pictorial reminder based on the digital image P is received. For example, in some embodiments, and as also depicted in Figure 3, the display module 105 can be controlled by the processing unit 107 to provide an icon 320, within the picture application PA, for indicating an availability of the mobile computing device 101 to receive the indication to create a pictorial reminder based on the digital image P, which can in turn be actuated via the input device 111 (e.g. a cursor can be used to point and click on the icon 320). Alternatively, the input device 111 can comprise a button, or the like, for indicating an availability of the mobile computing device 101 to receive the indication to create a pictorial reminder based on the digital image P.

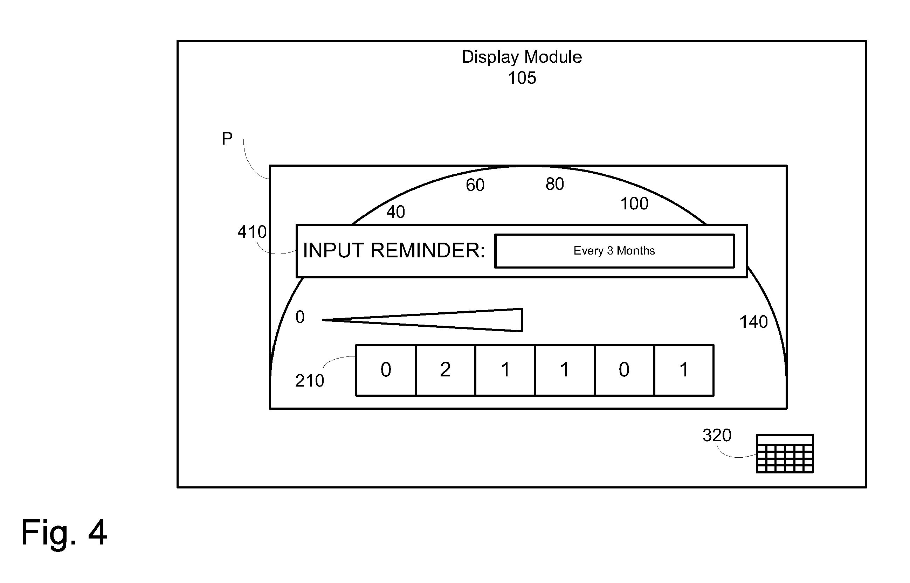

In some embodiments, as depicted in Figure 4, in response to actuation of the icon 320, the display module 105 can be controlled to display a prompt 410 indicating a readiness to receive the scheduling data SD. In these embodiments, the scheduling data SD can be received via the input device 111. For example the frequency of the reminder can be received: as depicted, in exemplary embodiments, the frequency of the reminder can be "Every 3 Months". Hence, in these exemplary embodiments, the scheduling data SD comprises "Every 3 Months".

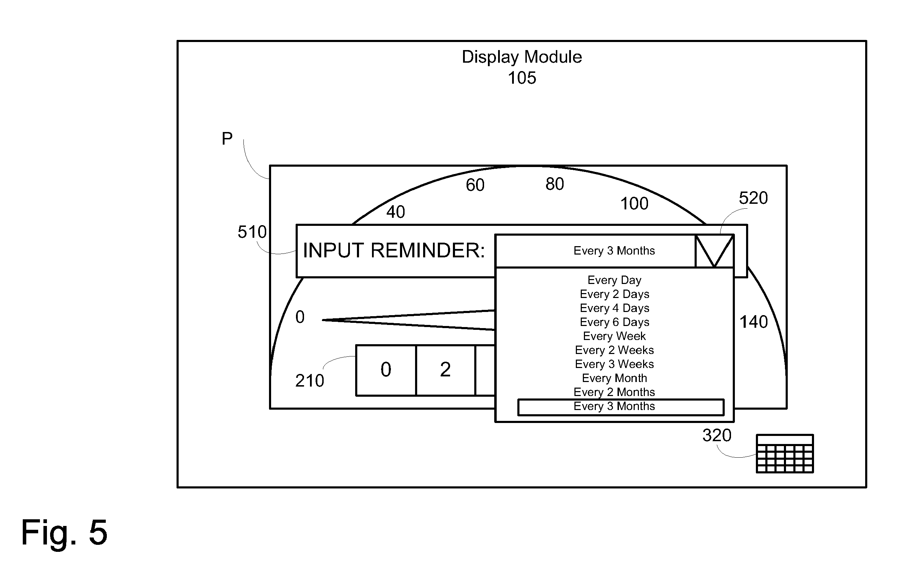

In other embodiments, as depicted in Figure 5, in response to actuation of the icon 320, the display module 105 can be controlled to display a prompt 510 for input of scheduling data SD. In these embodiments, the prompt 510 includes a pull down menu 520 comprising pre-configured possible frequencies of the reminder ("Every Day", "Every Month", "Every 3 Months", etc.). The scheduling data SD then be selected and/or entered via the input device 111: As depicted, in exemplary embodiments, the frequency of the reminder can be "Every 3 Months". Hence, in these exemplary embodiments, the scheduling data SD comprises "Every 3 Months".

In yet further embodiments, the scheduling data SD can include a current date (e.g. a date the digital image P was acquired), such that the calendar date upon which the reminder is to be provided, according to the frequency, can be provided.

In some embodiments, the scheduling data SD can include a date of a reminder, for example a date that the reminder is to be provided. The date can be received via the input device 111 via a prompt similar to prompt 410 and/or via a prompt similar to prompt 510 (with calendar dates displayed in place of frequencies) and/or a prompt which includes a calendar from which a date can be selected.

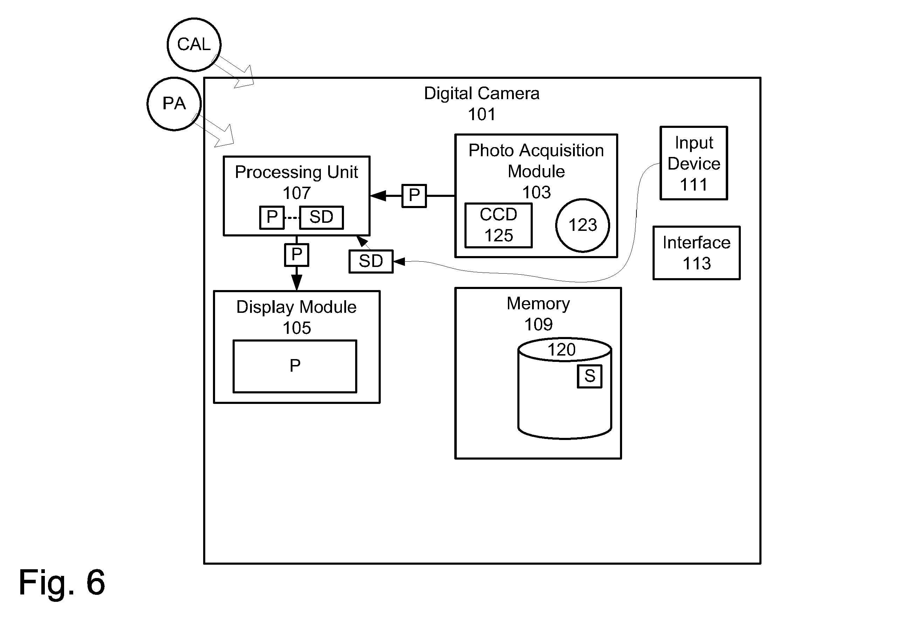

In any event, at step 225, and as depicted in Figure 6, the processing unit 107 receives an indication of the scheduling data SD.

In yet further embodiments, however the scheduling data SD can be set to a pre-configured default value (e.g. every 3 months), and the scheduling data SD is received via the pre-configured default value when the icon 320 is actuated, without display of prompts 410, 510, or further input. In some of these embodiments, the pre-configured value can be received upon acquisition of the digital image P, without display and/or actuation of the icon 320, and/or without display of prompts 410, 510, or further input. In some these embodiments, if the icon 320 is displayed, actuation of the icon 320 results in display of prompts 420 and/or 510, which can be used to change the pre-configured value.

At step 230, a pictorial-reminder record PRR is storing in the calendar database 12, including said scheduling data and an indication of the digital image. The indication of the digital image P can comprise one of the digital image P and an indication I of where said digital image is stored on the memory device 109 of the mobile computing device 101.

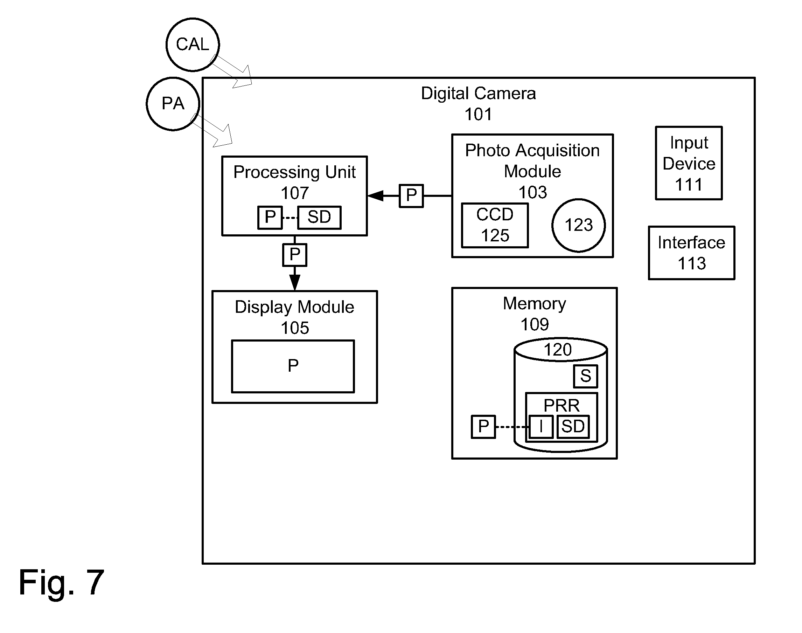

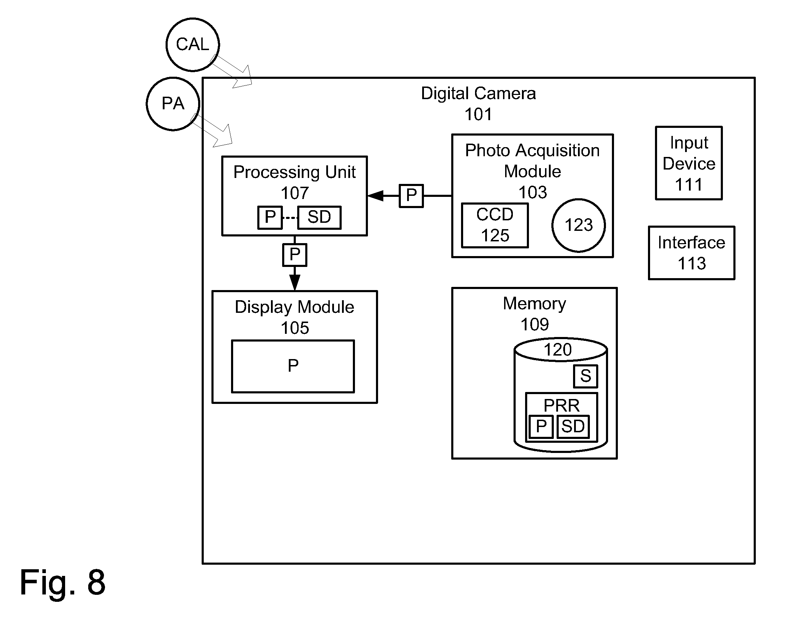

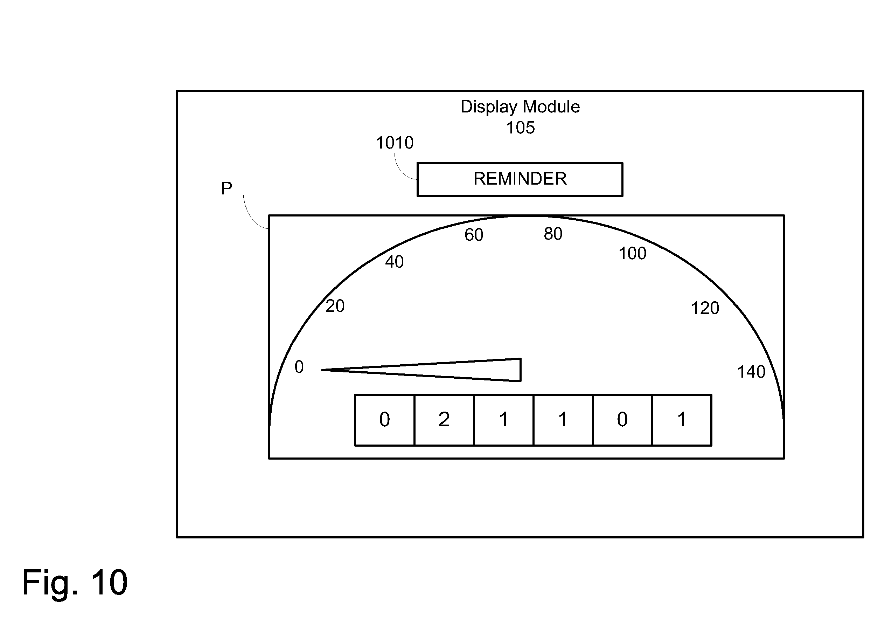

For example, as depicted in Figure 7, in some embodiments, the pictorial-reminder record PRR comprises a pointer (i.e. in the indication I) to the digital image P in the memory 109 and/or a memory address of the digital image P. In other embodiments, as depicted in Figure 8, the pictorial-reminder record PRR comprises the digital image P. In yet further embodiments, as depicted in Figure 10, the pictorial-reminder record PRR comprises the digital image P, the digital image P comprising the scheduling data SD. In general, it is understood that the scheduling data SD and the digital image P are associated but that that any suitable method of association is within the scope of present embodiments. Furthermore, the pictorial-reminder record PRR, including the scheduling data and the indication of the digital image, is in any suitable format.

Once the pictorial-reminder record PRR is stored in the calendar database 120, and in any appropriate format, at step 240, the digital image P can be displayed on the display module 105 in accordance with the scheduling data SD. For example, the digital image P can be displayed on the display module 105 at a time of day that is at least one of located within a predetermined time period and designated as free time in the calendar database 120, for example within the data S representative of a schedule.

For example, in some embodiments the mobile computing device 101 can process the calendar application 101 to determine when reminders should be displayed, such as for events stored in the data S representative of a schedule. Such a reminder can comprise alpha-numeric text displayed at the display module 105 at a given time/date (and oft times a location) (e.g. "Dentist Appointment" on "November 3, 2008" at "2pm", at "Dentist Office"). In contrast to this, in current embodiments, a pictorial reminder is displayed according to the scheduling data SD, the digital image P comprising the pictorial reminder, as depicted in Figure 10. In some embodiments, the digital image P can be displayed with text 1010 identifying it as a reminder.

For example, the digital image P can be displayed according to the frequency specified in the scheduling data SD (e.g. "every three months"), in order to provide a reminder of the visual data in the digital image P. In the example described above, the digital image P of Figure 3 is displayed every 3 months after the digital image P is acquired in order to provide a reminder to change the oil in the vehicle. Alternatively, the digital image P can be displayed on a particular date specified in the scheduling data SD.

Returning to Figure 2, in some embodiments, a time of day for the reminder can be unspecified in the scheduling data SD. In these embodiments, step 240 can be preceded by an optional step 240 in which a time of day for providing the digital image P is determined, the time of day based on the data S representative of a schedule stored in the calendar database 120. For example, the time of day can be located within free time in a schedule and/or within waking hours, such that the digital image P is provided at a convenient time of day. In these embodiments, it is understood that the data S representative of a schedule comprises data indicative of busy/free time and/or data indicative of waking hours.

Attention is now directed to Figure 11, which depicts a system 1110 for setting a reminder, according to non-limiting embodiments. The system 1100 comprises a digital camera 1101, which is similar to mobile computing device 101, with like elements having like numbers, but preceded by "11" rather than "1". For example, photo acquisition module 1103 is similar to photo acquisition module 103, etc. The camera 1101 is enabled to acquire a digital image P', similar to digital image P, and to associated scheduling data SD', similar to scheduling data SD, with the digital image P', as described above.

The system 1100 further comprises a computing device 1150 in communication with the digital camera 1101 via a link 1152. The link 1152 can be wired or wireless, as desired, and can comprise any suitable communication network (not depicted). It is furthermore understood that link 1152 can be used to synchronize the computing device 1150 with the camera 111 and/or convey the digital image P' and the scheduling data SD' to the computing device 1150, in any suitable format.

The computing device 1150 comprises a processing unit 1157 for processing a calendar application CAL' similar to the calendar application CAL. The computing device 1150 further comprises an interface 1152 compatible with link 1152. In general, interface 1113 at the digital camera 1101 is also compatible with link 1152.

The computing device 1159 further comprises a memory 1158 for storing a calendar database 1120, similar to calendar data base 120, and accessible by the calendar application CAL' such that reminders can be provided for events stored in the calendar database 120, such as in data S' representative of a schedule.

The computing device 1150 is in further communication with a display device 1165, similar to display module 1105. The processing unit 1157 is enabled to control the display device 1165 to display the digital image P' as a reminder in accordance with the scheduling data SD'. In some embodiments, the computing device 1150 can comprise the display device 1165.

The computing device 1150 can include, but is not limited to, a personal computer, a laptop computer, a mobile computing device, a PDA, a mobile phone and/or a combination.

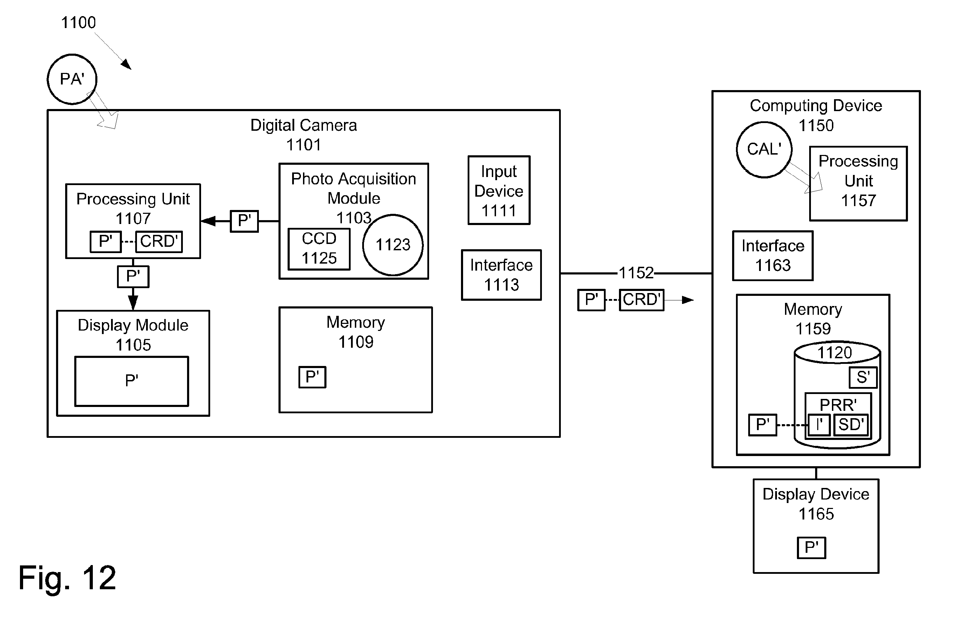

Once the computing device 1150 has received the digital image P' and the scheduling data SD', a pictorial reminder record PRR', comprising and the scheduling data SD' and an indication of the digital image P' as described above, are stored in the memory 1159 in any suitable format, similar to formats described above with respect to pictorial reminder record PRR, the scheduling data SD and the digital image P. Exemplary embodiments are depicted in Figure 12, in which the digital image P' is stored in the memory 1159 and the pictorial reminder record PRR' comprising the scheduling data SD' and an indication of the digital image P' is stored within the calendar database 1120. In Figure 12, the indication of the digital image P' comprises a pointer I' to the digital image P'

Method 200 can also be implemented within system 1100. In particular, the digital image P' and the scheduling data SD' can be at the digital camera 1101 (e.g. steps 210, 220, and 225), and the pictorial reminder record PRR' stored the computing device 1150 (i.e. step 230), once the digital image P' and the scheduling data SD' have been conveyed to the computing device 1150. The digital image P' can then be provided as a reminder at the computing device 1150, according to at least one of a frequency and a date specified in the scheduling data SD'.

In any event, by storing a pictorial-reminder record PRR/PRR', including scheduling data SD/SD' and an indication of the digital image P, potential strain on the system resources of the mobile computing device 101, 1101 and/or the computing device 1150 can be relieved. For example, a location of the digital image P (and/or P') does not need to be searched, relieving strain on the processing units 107, 1107 and 1157, as well as mechanical strain on the input devices 111, 1111. Furthermore such an approach can generally provide more convenience and versatility in setting reminders.

Those skilled in the art will appreciate that in some embodiments, the functionality of the mobile computing device 101, 1101 and the computing device 1150 can be implemented using pre-programmed hardware or firmware elements (e.g., application specific integrated circuits (ASICs), electrically erasable programmable read-only memories (EEPROMs), etc.), or other related components. In other embodiments, the functionality of the mobile computing device 101, 1101 and the computing device 1150 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for setting pictorial reminders, via a picture application, using a mobile computing device (101) enabled to acquire digital images, the method comprising,
acquiring, via said picture application, a digital image at said mobile computing device (101);
within said picture application at said mobile computing device (101), receiving an indication to create a pictorial reminder based on said digital image;
receiving an indication of scheduling data, said scheduling data for scheduling displaying of said digital image on a display (105) of said mobile computing device (101); and
storing, in a database (120) on the mobile computing device (101), a pictorial-reminder record comprising said scheduling data and an indication of said digital image.

2. The method of claim 1, wherein said acquiring comprises at least one of capturing said digital image via a digital camera (103) on the mobile computing device (101), receiving said digital image via communications with an external device, and receiving a selection of said digital image from amongst one or more digital images stored on a memory device (109) of the mobile computing device (101).

3. The method of claim 1 or claim 2, wherein said scheduling data comprises a start date for displaying said digital image.

4. The method of claim 3, wherein said scheduling data comprises a time interval at which the displaying of said digital image is periodically repeated beginning at said starting date.

5. The method of claim 3 or claim 4, wherein said start date is a current date.

6. The method of any one of the preceding claims, wherein said indication of said digital image is one of said digital image and an indication of where said digital image is stored on a memory device (109) of the mobile computing device (101).

7. The method of any one of the preceding claims, further comprising displaying said digital image on the display (105) in accordance with said scheduling data.

8. The method of claim 7, wherein said displaying said digital image on the display (105) in accordance with said scheduling data comprises displaying at a time of day that is at least one of located within a predetermined time period and designated as free time in a calendar database (120).

9. The method of claim 8, wherein said calendar database (120) comprises said database (120).

10. The method of any one of claims 7 to 9, wherein displaying said digital image on the display (105) in accordance with said scheduling data comprises providing an option to alter said scheduling data.

11. The method of any one of the preceding claims, further comprising providing, within the picture application, an icon indicative of setting pictorial reminders, wherein receiving an indication to create a pictorial reminder comprises receiving a selection of said icon in association with said digital image.

12. A mobile computing device (101) for setting pictorial reminders, the mobile computing device comprising,
a display (105) enabled to display a digital image;
a memory device (109) for storing a database (120);
a processing unit (107) in communication with said display (105) and said memory device (109), said processing unit (107) enabled to implement the steps of the method of any of claims 1 to 11.

13. A computer-readable medium for storing computer-readable code embodied therein, the computer-readable code being executable by a processor of a computing device for causing said computing device implement the steps of the method of any of claims 1 to 11.

## Amended claims

### Amended claims in accordance with Rule 137(2) EPC.

**1.** A method for setting pictorial reminders, via a picture application, using a mobile computing device (101) enabled to acquire digital images, the method comprising,
acquiring, via said picture application, a digital image at said mobile computing device (101);
within said picture application at said mobile computing device (101), receiving an indication to create a pictorial reminder based on said digital image;
receiving an indication of scheduling data, said scheduling data for scheduling displaying of said digital image on a display (105) of said mobile computing device (101);
storing, in a database (120) on the mobile computing device (101), a pictorial-reminder record comprising said scheduling data and an indication of said digital image; and
displaying said digital image on the display (105) in accordance with said scheduling data at a time of day designated as free time in a calendar database (120).

**2.** The method of claim 1, wherein said scheduling data comprises data identifying one or more dates for displaying said digital image on the display (105) and displaying said digital image comprises displaying said digital image on the date or dates specified by said scheduling data at a time of day designated as free time in the calendar database (120).

**3.** The method of claim 2, wherein said calendar database (120) stores data indicative of busy/free time and/or data indicative of waking hours for particular dates and displaying said digital image comprises displaying said digital image on the display (105) on the date or dates specified by said scheduling data at a time of day designated as free time and/or waking hours by the data stored in the calendar database (120).

**4.** The method of any of claims 1-3, wherein said acquiring comprises at least one of capturing said digital image via a digital camera (103) on the mobile computing device (101), receiving said digital image via communications with an external device, and receiving a selection of said digital image from amongst one or more digital images stored on a memory device (109) of the mobile computing device (101).

**5.** The method of any preceding claim, wherein said scheduling data comprises a start date for displaying said digital image.

**6.** The method of claim 5, wherein said scheduling data comprises a time interval at which the displaying of said digital image is periodically repeated beginning at said start date.

**7.** The method of claim 5 or claim 6, wherein said start date is a current date.

**8.** The method of any one of the preceding claims, wherein said indication of said digital image is one of said digital image and an indication of where said digital image is stored on a memory device (109) of the mobile computing device (101).

**9.** The method of any preceding claim, wherein said calendar database (120) comprises said database (120).

**10.** The method of any preceding claim, wherein displaying said digital image on the display (105) in accordance with said scheduling data comprises providing an option to alter said scheduling data.

**11.** The method of any one of the preceding claims, further comprising providing, within the picture application, an icon indicative of setting pictorial reminders, wherein receiving an indication to create a pictorial reminder comprises receiving a selection of said icon in association with said digital image.

**12.** A mobile computing device (101) for setting pictorial reminders, the mobile computing device comprising,
a display (105) enabled to display a digital image;
a memory device (109) for storing a database (120);
a processing unit (107) in communication with said display (105) and said memory device (109), said processing unit (107) enabled to implement the steps of the method of any of claims 1 to 11.

**13.** A computer-readable medium for storing computer-readable code embodied therein, the computer-readable code being executable by a processor of a computing device for causing said computing device implement the steps of the method of any of claims 1 to 11.
